Europäisches Patentamt

European Patent Office

Office européen des brevets

(19)

(11) Veröffentlichungsnummer: **0 308 884 B1**

(12) # EUROPÄISCHE PATENTSCHRIFT

(45) Veröffentlichungstag der Patentschrift:
03.07.91 Patentblatt 91/27

(51) Int. Cl.$^5$: **C09C 1/00**, C09C 1/02

(21) Anmeldenummer: **88115461.1**

(22) Anmeldetag: **21.09.88**

(54) Korrosionsschutzpigmente auf der Basis von Erdalkalihydrogenphosphaten.

(30) Priorität: **21.09.87 DE 3731737**

(43) Veröffentlichungstag der Anmeldung:
**29.03.89 Patentblatt 89/13**

(45) Bekanntmachung des Hinweises auf die
Patenterteilung:
**03.07.91 Patentblatt 91/27**

(84) Benannte Vertragsstaaten:
**DE ES FR GB IT NL**

(56) Entgegenhaltungen:
**EP-A- 0 011 223**
**EP-A- 0 017 784**
**CHEMICAL ABSTRACTS, Band 90, Nr. 4, 22.**
**Januar 1979, Seite 132, Zusammenfassung Nr.**
**25594t, Columbus, Ohio, US; & JP-A-78 56 174**
**(KYOWA CHEMICAL INDUSTRY) 22-05-1978**

(73) Patentinhaber: **Dr. Hans Heubach GmbH & Co.**
**KG**
**Heubachstrasse Postfach 1160**
**W-3394 Langelsheim 1 (DE)**

(72) Erfinder: **Bittner, Annegret, geb. Ross**
**Am Wiesenhang 19**
**W-3394 Langelsheim (DE)**

(74) Vertreter: **Patentanwälte Deufel, Hertel,**
**Lewald**
**Isartorplatz 6 Postfach 26 02 47**
**W-8000 München 26 (DE)**

## Beschreibung

In der Praxis haben strontiumchromathaltige Primer bei der Herstellung von Beschichtungen zum Schutz von Metallen, insbesondere von vorbehandelten Aluminiumlegierungen, in der Flugzeugindustrie große Bedeutung. Die besten Beschichtungssysteme für Verkehrsflugzeuge bestehen seit geraumer Zeit aus einer chemischen Konversionsschicht, nämlich einer Chromat, Phosphat-Schutzschicht, die auf Al-Oberflächen im Tauch-, Wisch-, Spritz- oder Walzverfahren als Korrosionsschutz erzeugt wird und z.B. unter der Bezeichnung Alodine 1200 bekannt ist, oder einem sauren Washprimer, danach einer Epoxyamin oder Polyamid-Korrosionsschutzbeschichtung oder einer Polyurethan (PUR) Korrosionsschutzbeschichtung mit einer hochglänzenden aliphatischen PUR-Deckbeschichtung. Durch die Verwendung von Strontiumchromat in der Korrosionsschutzbeschichtung wird die Filiformkorrosion verhindert. Filiformkorrosion wird nur auf vorbehandelten Untergründen wie Fe, Zn, Mg, Stahl, Ni, Cr und besonders Al beobachtet. Zwischen dem chemisch vorbehandelten Untergrund und der Beschichtung tritt von einer beschädigten Stelle im Lackfilm ein (sternförmiger) Haftungsverlust – bevorzugt bei Luftfeuchtigkeiten von 65-95% und Temperaturen von ca. 30°C, auf, der zum Abplatzen der Beschichtung führt.

So ist auch aus der DE-PS 74 77 80 eine Gruppe von Korrosionsschutzpigmenten bekannt, wobei auf inaktive Füllstoffe ein Verbindungsgemisch niedergeschlagen wird, das als Kation mindestens zwei der Metalle Calcium, Strontium, Barium, Magnesium, Zink und als Anion Chromation und noch mindestens ein Anion der Kohlen-, Phosphor-, Kiesel-, Fluorwasserstoff- oder Borsäure enthält. Somit ist immer ein Chromat vorhanden, wobei die besten Ergebnisse ebenfalls mit Strontiumchromat erzielt werden.

Strontiumchromat gehört jedoch zu den Korrosionsschutzpigmenten, die wie Zinkchromat, aufgrund ihrer kanzerogenen Wirkung physiologisch bedenklich sind und nach Möglichkeit nicht mehr verwendet werden sollten.

Als Ersatz hat man Zinkphosphat und modifizierte Zinkphosphate versucht, wie sie in den EU-A Nr. 0054266 und 0054267 gezeigt sind und die aus Umweltgründen in zunehmendem Maße anstelle von Zinkchromat eingesetzt werden. Diese Zinkphosphate führen jedoch zu keiner Veränderung der Filiformkorrosion. Man hat auch Strontiumhydrogenphosphate untersucht, jedoch ergaben diese nicht die Schutzwirkung, die bei Strontiumchromat festzustellen ist.

Die EU-PS 0011223 zeigt ein korrosionsinhibierendes Pigment und eine Anstrichfarbe auf Phosphatbasis, bestehend aus einer Mischung von 3 bis 97 Gew.-% $MgHPO_4 \cdot 3H_2O$, Rest $CaHPO_4 \cdot 2H_2O$. Das Pigment eignet sich insbesondere zum Schutz von Eisen und Eisenlegierungen und kann als Anstrichfarbe oder Paste aufgebracht werden. Das Pigment ist bis zu 95 Gew.-% durch Pigmentstreckungsmittel austauschbar, z.B. Baryte, Talkum, Erdalkalicarbonate oder Wollastonit und in der getrockneten Schutzschicht soll das Pigment in einer Pigmentvolumenkonzentration von 10 bis 60 Vol.-% vorhanden sein.

Diese Kombinationspigmente aus Magnesium und Calciumhydrogenphosphat eignet sich jedoch nicht recht gut für Aluminium oder gemischte Untergründe, die nicht ausschließlich aus Eisen und Eisenlegierungen bestehen.

Es besteht also immer noch ein Bedürfnis nach einer Korrosionsschutzbeschichtung für Metalle, insbesondere Aluminium, welche nichttoxisch aber hinsichtlich ihrer Beständigkeit gegen Filiformkorrosion mit dem bekannten Strontiumchromat vergleichbar sind.

Es wurde nun gefunden, daß carbonathaltige Erdalkalihydrogenphosphate, insbesondere Magnesium- und Strontiumhydrogenphosphate, bessere Beständigkeiten gegen Filiformkorrosion aufweisen als andere Metallphosphate, insbesondere auch als Magensiumhydrogenphosphat und Strontiumhydrogenphosphat ohne Carbonatbestandteil des gleichen Erdalkalimetalls. Die komplexe Wirkung dieser carbonathaltigen Erdalkaliphosphate wird durch Zusätze von Fluorosilicaten und/oder Fluoroboraten und/oder Alkali- bzw. Erdalkalifluoriden noch weiter verbessert. Dabei kommen als Metallteil der Fluorosilicate und Fluoroborate Schwermetalle aber auch die Gruppen II und III des Periodischen Systems, also Erdalkalimetalle und Erdmetalle, und hier insbes. Al, in Frage.

Es sind wenigstens 40 Mol.-% Erdalkalicarbonat im Komplex erforderlich, um eine ausreichende Korrosionsschutzwirkung zu ergeben, noch besser sind 50 Mol.-% Erdalkalicarbonat, Rest Erdalkalihydrogenphosphat. Ein Carbonatanteil von 80% soll nicht überschritten werden.

Die Zusätze an Fluorosilicaten oder Fluoroboraten und/oder Alkali- bzw. Erdalkalifluoriden sind verhältnismäßig gering und betragen etwa 0,05 bis 3%, insbesondere 0,1 bis 1%, wobei häufig eine Mengen von 0,1 bis 0,5% sehr gute Ergebnisse liefert. Dies kann, ebenso wie das Verhältnis zwischen Erdalkalihydrogenphosphat und Erdalkalicarbonat, durch wenige Routineversuche ausprobiert werden.

Die folgenden Beispiele erläutern die Erfindung.

2

## Herstellungsbeispiel

Durch die Umsetzung von Magnesiumcarbonat in einer wäßrigen 10-40 %igen Suspension mit technischer Phosphorsäure im Mol-Verhältnis 2 : 1 entsteht Magnesiumhydrogenphosphat mit einem Carbonatanteil von 50 Mol-%. Die Reaktion kann bei Temperaturen zwischen Zimmertemperatur und Siedehitze des Gemisches durchgeführt werden, wird jedoch vorzugsweise bei einer Menge von einigen Kilo bei Temperaturen von 30 bis 50°C für eine Zeitdauer von 30 min durchgeführt, wobei die Zeitdauer aber auch die Temperatur von der umgesetzten Menge abhängen. Bei einer Produktionscharge von ca. 5 t z.B. steigt die Temperatur durch die entstehende Reaktionswärme auf ca. 90°C und die Reaktion dauert ca. 3 h. Die Reaktionsdauer und Reaktionstemperatur sind also umso länger und höher, je größer die eingesetzte Menge ist. Die Temperaturerhöhung hat auch die günstige Wirkung, daß die Reaktionszeit in vernünftigen Grenzen gehalten werden kann. Die gefällten Pigmente werden in üblicher Weise abfiltriert, bei 105°C getrocknet und vermahlen.

In gleicher Weise wurden Mischpigmente aus Strontiumcarbonat mit Phosphorsäure hergestellt.

Durch Variieren der Bestandteile an Carbonat und Phosphorsäure wurden Mischpigmente mit 0,7 Mol Strontiumhydrogenphosphat und 0,3 Mol Strontiumcarbonat und 0,4 Mol Strontiumhydrogenphosphat und 0,6 Mol Strontiumcarbonat hergestellt.

Dem letztgenannten Pigment wurden noch in einem Fall 0,3% Bleifluoroborat, in einem Fall 0,3% Kupferfluorosilicat, in einem Fall 0,1% Kaliumfluorid und in einem Fall 0,3% Magnesiumfluorosilicat zugesetzt.

Diese Pigmente, die mit Pigment 1 bis 5 bezeichnet sind, wurden gemäß der folgenden Tabelle in Lackbeschichtungszusammensetzungen, wie sie für die Flugzeugbeschichtung üblich sind, mit Strontiumchromat, Zinkphosphat, Magnesiumhydrogenphosphat, Strontiumhydrogenphosphat verglichen, indem sie als übliche 2-K-Beschichtung auf Basis Epoxy-Polyamid für Flugzeuge auf Alumiumbleche aufgetragen und dann getestet wurden.

## Prüfung :

Die genannten Korrosionsschutzpigmente wurden im Vergleich zu Strontiumchromat und Zinkphosphat in Grundbeschichtungen im Beschichtungsaufbau auf Aluminiumuntergründen geprüft.

1. 1000 Stunden Salzsprühtest DIN 50021
2. 24 Stunden Wasserlagerung bei R.T.
3. 500 Stunden Lagerung bei 85% rel.Luftfeuchtigkeit und 25°C, vorherige einstündige Initiierung der angeritzten Bleche im konz. HCl-Dampf.

## Beschichtungssystem :

| Untergrund : | AL 2024(ASTM D 1733-65) QQ-A-250/4, T 3 temper |
| Konversionsschicht : | Gelbchromatierung (Alodine 1200) |
| Grundbeschichtung : | Basis Epoxid-Polyamidharz (Rezepturen siehe Tab. 2) Trockenschichtdicke 20µm |
| Deckbeschichtung : | Basis Polyurethanharz Trockenschichtdicke 45 µm. |

## Ergebnis :

In Salzsprühtesten in der Wasserlagerung wurden mit den carbonathaltigen Korrosionsschutzpigmenten vergleichbar gute Ergebnisse wie mit Strontiumchromat gefunden.

Wichtigstes Kriterium für die Beurteilung der neuen Korrosionsschutzpigmente ist die Prüfung der Filiformbeständigkeit. Dabei erfolgt die Bewertung durch Messung der durchschnittlichen Unterwanderung in mm am Schnitt.

Die Prüfungsergebnisse der Filiformbeständigkeit sind in der folgenden Tabelle 1 dargestellt.

## TABELLE 1

Vergleich der Filiformkorrosion in mm

nach 500-stündiger Lagerung bei 85 % rel. Feuchte und 25 °C

| | Zusatz | mm |
|---|---|---|
| Strontiumchromat | | 1 |
| Zinkphosphat | | 6 |
| [MgHPO$_4$] · xH$_2$O (Pigment 1) | | 4 |
| [0,5 MgHPO$_4$ · 0,5 MgCO$_3$] · xH$_2$O (Pigment 2) | | 2 − 3 |
| [SrHPO$_4$] · xH$_2$O (Pigment 3) | | 4 |
| [0,7 SrHPO$_4$ · 0,3 SrCO$_3$] · xH$_2$O (Pigment 4) | | 2 − 3 |
| [0,4 SrHPO$_4$ · 0,6 SrCO$_3$] · xH$_2$O | | 2 − 3 |
| [0,4 SrHPO$_4$ · 0,6 SrCO$_3$] · xH$_2$O (Pigment 5) | 0,3 % Pb(BF$_4$)$_2$ | 2 |
| [0,4 SrHPO$_4$ · 0,6 SrCO$_3$] · xH$_2$O | 0,3 % CuSiF$_6$ | 2 |
| [0,4 SrHPO$_4$ · 0,6 SrCO$_3$] · xH$_2$O | 0,1 % KF | 2 |
| [0,4 SrHPO$_4$ · 0,6 SrCO$_3$] · xH$_2$O | 0,3 % MgSiF$_6$ | 2 |

TABELLE 2

2-K-Beschichtungen auf Basis Epoxy-Polyamid für Flugzeuge

Typ I

| Komponente A | 1 | 2 | 3 | 4 | 5 | 6 | 7 |
|---|---|---|---|---|---|---|---|
| Epoxidharz 75 % ig in Toluol (Molekulargewicht : 900, EP-Aquivalentgewicht 2000-2220) | 21,6 | 20,4 | 22,3 | 21,8 | 21,8 | 20,9 | 20,9 |
| n-Butylacetat | 1,8 | 1,7 | 1,8 | 1,8 | 1,8 | 1,8 | 1,8 |
| Methylethylketon | 1,8 | 1,7 | 1,9 | 1,8 | 1,8 | 1,7 | 1,7 |
| Antiabsetzmittel | 1,1 | 1,0 | 1,2 | 1,1 | 1,1 | 1,0 | 1,0 |
| n-Butylacetat | 5,7 | 5,6 | 5,8 | 5,8 | 5,8 | 5,5 | 5,5 |
| Methylethylketon | 5,6 | 5,6 | 5,8 | 5,8 | 5,8 | 5,5 | 5,5 |
| Strontiumchromat | 11,6 | — | — | — | — | — | — |
| Zinkphosphat | — | 13,0 | — | — | — | — | — |
| Pigment 1 | — | — | 11,1 | — | — | — | — |
| Pigment 2 | — | — | — | 11,4 | — | — | — |
| Pigment 3 | — | — | — | — | 11,4 | — | — |
| Pigment 4 | — | — | — | — | — | 12,7 | — |
| Pigment 5 | — | — | — | — | — | — | 12,7 |
| Rutil-Titandioxid | 2,3 | 2,4 | 2,1 | 2,2 | 2,2 | 2,4 | 2,4 |
| Kieselgur | 2,9 | 2,8 | 2,7 | 2,7 | 2,7 | 2,9 | 2,9 |
| Magnesiumsilikat | 5,6 | 5,8 | 5,3 | 5,5 | 5,5 | 5,6 | 5,6 |
| Komponente B Polyamid-Härter, 70 % ig in Xylol (H-Aquivalentgewicht 240) | 11,5 | 10,9 | 12,0 | 11,6 | 11,6 | 12,6 | 12,6 |
| Ethylglykol | 15,5 | 16,1 | 15,0 | 15,5 | 15,5 | 14,4 | 14,4 |
| Toluol | 6,5 | 6,5 | 6,5 | 6,5 | 6,5 | 6,5 | 6,5 |
| Methylethylketon | 6,5 | 6,5 | 6,5 | 6,5 | 6,5 | 6,5 | 6,5 |
| | 100,0 | 100,0 | 100,0 | 100,0 | 100,0 | 100,0 | 100,0 |
| PVK in % | 24,5 | 26,0 | 23,0 | 24,0 | 24,0 | 23,5 | 23,5 |

Komponente A und B werden vor der Verarbeitung volumenmäßig 1 : 1 gemischt.

## Ansprüche

1. Korrosionsschutzpigmente auf der Basis von Erdalkalihydrogenphosphaten, dadurch gekennzeichnet, daß sie 20 Mol.-% bis 60 Mol.-% Erdalkalicarbonat und 40 bis 80 Mol.-% Erdalkalihydrogenphosphat des gleichen Erdalkalimetalls enthalten.

2. Korrosionsschutzpigmente nach Anspruch 1, dadurch gekennzeichnet, daß das Erdalkalimetall Magnesium oder Strontium ist.

3. Korrosionsschutzpigmente nach einem der vorhergehenden Ansprüche, dadurch gekennzeichnet, daß sie Zusätze von Fluorosilicaten und/oder Fluoroboraten und/oder Alkali-bzw. Erdalkalifluoriden enthalten.

4. Korrosionsschutzpigmente nach Anspruch 3, dadurch gekennzeichnet, daß die Zusätze 0,05 bis 3 Gew.-%, insbesondere 0,1 bis 1 Gew.-% und vorzugsweise 0,1 bis 0,5 Gew.-% betragen.

## Claims

1. Anticorrosive pigments on the basis of alkaline earth hydrogen phosphates, characterized in that they contain from 20 mole-% to 60 mole-% of alkaline earth carbonate and from 40 to 80 mole-% of alkaline earth hydrogen phosphate of the same alkaline earth metal.

2. Anticorrosive pigments according to claim 1, characterized in that said alkaline earth metal is magnesium or strontium.

3. Anticorrosive pigments according to one of the preceding claims, characterized in that they contain additions of fluorosilicates and/or fluoroborates and/or alkaline or, resp., alkaline earth fluorides.

4. Anticorrosive pigments according to claim 3, characterized in that said additions amount to from 0.05 to 3% by weight, particularly to from 0.1 to 1% by weight and preferably to from 0.1 to 0.5% by weight.

**Revendications**

1. Pigments anti corrosion à base d'hydrogénophosphates d'alcalino-terreux, caractérisés en ce qu'ils contiennent de 20% à 60% mol. de carbonates d'alcalino-terreux et de 40% à 80% mol. d'hydrogénophosphates d'alcalino-terreux des mêmes métaux alcalino-terreux.

2. Pigments anti corrosion selon la revendication 1, caractérisés en ce que le métal alcalino-terreux est du magnésium ou du strontium.

3. Pigments anti corrosion selon l'une quelconque des revendications précédentes, caractérisés en ce qu'ils contiennent des additions de fluorosilicates et/ou de fluoroborates et/ou de fluorures d'alcalins ou d'alcalino-terreux.

4. Pigments anti corrosion selon la revendication 3 caractérisés en ce que les teneurs en additifs sont de 0,05 à 3% en masse, en particulier de 0,1 à 1% en masse et de préférence de 0,1 à 0,5% en masse.